# EUROPEAN PATENT APPLICATION

(11) **EP 4 568 366 A1**
(43) Date of publication of application: **11.06.2025**
(21) Application number: 22953604.0
(22) Date of filing: 04.08.2022
(51) Int. Cl.: H04W 52/24

(54) **METHOD FOR SENDING SIDELINK (SL) POSITIONING REFERENCE SIGNAL (PRS), AND APPARATUS**

(71) Applicant: Beijing Xiaomi Mobile Software Co., Ltd., Beijing 100085 (CN)
(72) Inventor: JIANG, Xiaowei, Beijing 100085 (CN)
(74) Representative: Gunzelmann, Rainer
(86) International application number: PCT/CN2022/110383
(87) International publication number: WO 2024/026795

(57) **Abstract**

Embodiments of the present invention can be applied to the technical field of communications. Disclosed are a method for sending a sidelink (SL) positioning reference signal (PRS), and an apparatus. The method executed by a first terminal device comprises: determining transmission power of the SL PRS according to a path loss of a transmission path (201); and sending the SL PRS on the basis of the transmission power (202). Therefore, it is ensured that positioning auxiliary devices can receive the SL PRS, thereby achieving accurate and reliable positioning of the terminal device.

## Description

### FIELD

The present disclosure relates to the field of communication technologies, and in particular to a method and an apparatus for transmitting a sidelink (SL) positioning reference signal (PRS).

### BACKGROUND

A terminal device can perform positioning by transmitting a sidelink (SL) positioning reference signal (PRS). The SL PRS transmitted by the terminal device may need to be received by multiple positioning auxiliary devices, and method of determining the transmission power of the SL PRS needs to be specified.

### SUMMARY

Embodiments of the present disclosure provide a method and an apparatus for transmitting a sidelink (SL) positioning reference signal (PRS). A transmission power of the SL PRS is determined according to a path loss of a transmission path, and the SL PRS is transmitted, ensuring that all positioning auxiliary devices can receive the SL PRS, achieving accurate and reliable positioning of a terminal device.

In a first aspect, an embodiment of the present disclosure provides a method for transmitting a sidelink (SL) positioning reference signal (PRS). The method is performed by a first terminal device. The method includes: determining a transmission power of the SL PRS according to a path loss of a transmission path; and transmitting the SL PRS according to the transmission power.

In the present disclosure, the first terminal device determines the transmission power of the SL PRS according to the path loss of the transmission path, and then transmits the SL PRS, thereby ensuring that each of multiple positioning auxiliary devices can receive the SL PRS, and achieving accurate and reliable positioning of the terminal device.

In a second aspect, an embodiment of the present disclosure provides a communication device, which includes:
a processing module, configured to determine a transmission power of an SL PRS according to a path loss of a transmission path; and
a transceiver module, configured to transmit the SL PRS according to the transmission power.

In a third aspect, an embodiment of the present disclosure provides a communication device. The communication device includes a processor. When invoking a computer program in a memory, the processor executes the method described in the first aspect.

In a fourth aspect, an embodiment of the present disclosure provides a communication device. The communication device includes a processor and a memory, and a computer program is stored in the memory. The processor is configured to execute the computer program stored in the memory to cause the communication device to execute the method described in the above first aspect.

In a fifth aspect, an embodiment of the present disclosure provides a communication device. The device includes a processor and an interface circuit. The interface circuit is configured to receive code instructions and transmit them to the processor. The processor is configured to execute the code instructions to cause the device to execute the method described in the above first aspect.

In a sixth aspect, an embodiment of the present disclosure provides a communication system. The system includes the communication device described in the second aspect, or the system includes the communication device described in the third aspect, or the system includes the communication device described in the fourth aspect, or the system includes the communication device described in the fifth aspect.

In a seventh aspect, an embodiment of the present disclosure provides a computer-readable storage medium, configured to store instructions used by the terminal device. The instructions, when executed, cause the terminal device to execute the method described in the first aspect.

In an eighth aspect, the present disclosure also provides a computer program product, including a computer program, which, when running on a computer, causes the computer to execute the method described in any one of the above first aspect.

In a ninth aspect, the present disclosure provides a chip system. The chip system includes at least one processor and an interface for supporting the first terminal device to implement the functions involved in the first aspect, for example, determining or processing at least one of data or information involved in the above method. In a possible design, the chip system further includes a memory, and the memory is configured to store necessary computer programs and data for the terminal device. The chip system may be composed of chips, or may include a chip and other discrete devices.

In a tenth aspect, the present disclosure provides a computer program that, when running on a computer, causes the computer to perform the method described in any one of the above first aspect.

### BRIEF DESCRIPTION OF THE DRAWINGS

In order to more clearly illustrate the technical solutions in the embodiments of the present disclosure or the background technology, the drawings required to be used in the embodiments or the background technology of the present disclosure will be described below.
FIG. 1 is a schematic architectural diagram of a communication system provided by an embodiment of the present disclosure.
FIG. 2 is a schematic flowchart of a method for transmitting a sidelink (SL) positioning reference signal (PRS) provided by an embodiment of the present disclosure.
FIG. 3 is a schematic flowchart of another method for transmitting a sidelink (SL) positioning reference signal (PRS) provided by an embodiment of the present disclosure.
FIG. 4 is a schematic flowchart of another method for transmitting a sidelink (SL) positioning reference signal (PRS) provided by an embodiment of the present disclosure.
FIG. 5 is a schematic flowchart of another method for transmitting a sidelink (SL) positioning reference signal (PRS) provided by an embodiment of the present disclosure.
FIG. 6 is a schematic flowchart of another method for transmitting a sidelink (SL) positioning reference signal (PRS) provided by an embodiment of the present disclosure.
FIG. 7 is a schematic flowchart of another method for transmitting a sidelink (SL) positioning reference signal (PRS) provided by embodiment of the present disclosure.
FIG. 8 is a schematic flowchart of another method for transmitting a sidelink (SL) positioning reference signal (PRS) provided by an embodiment of the present disclosure.
FIG. 9 is a schematic structural diagram of a communication device provided by an embodiment of the present disclosure.
FIG. 10 is a schematic structural diagram of another communication device provided by an embodiment of the present disclosure.
FIG. 11 is a schematic structural diagram of a chip provided by an embodiment of the present disclosure.

### DETAILED DESCRIPTION

For ease of understanding, terminologies involved in the present disclosure will be first introduced.

### 1. Positioning auxiliary device

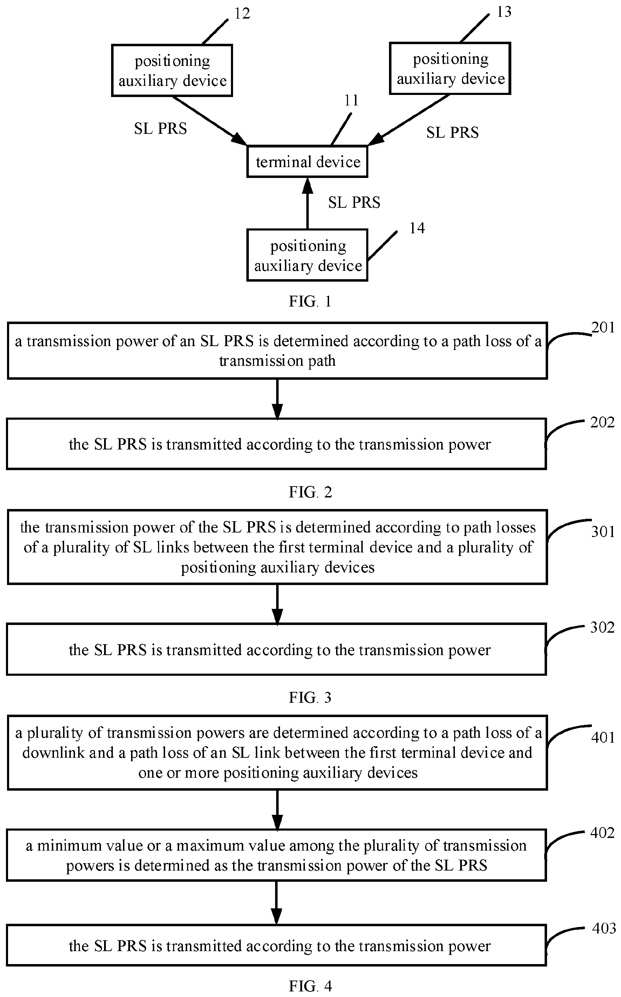

There are different types of positioning auxiliary devices, such as a positioning auxiliary device of a type of road side unit (RSU), which is an infrastructure that can provide positioning services by cooperating with other RSUs. For example, FIG. 1 is a schematic architectural diagram of a communication system provided by an embodiment of the present disclosure, a terminal device 11 can determine a specific position of the terminal device relative to the RSU by measuring PRS transmitted by multiple (greater than or equal to 3) positioning auxiliary devices (RSU) through SL links.

If a positioning result is not converted into absolute position coordinates according to absolute position information such as GPS of RSU, the positioning result is relative positioning; otherwise, it is absolute positioning. The RSU that participates in relative positioning or absolute positioning is a positioning auxiliary device.

Alternatively, the terminal device may also be used as a positioning auxiliary device, and it is difficult for the terminal device to assist in providing positioning services together with other UEs. In addition, some positioning auxiliary devices can obtain position information through global positioning system (GPS) and the like, which can assist other terminal devices in absolute positioning.

Referring to FIG. 1, the communication system may include, but not limited to, one terminal device and one positioning auxiliary device. The number and the form of devices shown in FIG. 1 are only for examples and do not constitute a limitation onto the embodiments of the present disclosure. In actual applications, the system may include two or more terminal devices, and two or more positioning auxiliary devices. The communication system shown in FIG. 1 includes one terminal device 11 and three positioning auxiliary devices 12, 13 and 14, which is taken as an example.

It should be noted that the technical solutions of the embodiments of the present disclosure may be applied to various communication systems, for example, a long term evolved (LTE) system, a 5th generation (5G) mobile communication system, a 5G new radio (NR) system, or other future new mobile communication systems.

The terminal device 11 in the embodiments of the present disclosure may be an entity on the user side for receiving or transmitting signals, such as a mobile phone. The terminal device may also be referred to as terminal, user equipment (UE), mobile station (MS), mobile terminal (MT), etc. The terminal device may be a car with communication functions, a smart car, a mobile phone, a wearable device, a tablet computer (Pad), a computer with wireless transceiver functions, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in smart city, a wireless terminal device in smart home, etc. The specific technique and the specific device form used by the terminal device are not limited in the embodiments of the present disclosure.

The positioning auxiliary device in the embodiments of the present disclosure may be an entity for transmitting or receiving signals. For example, the positioning auxiliary device may be an RSU, or the positioning auxiliary device may also be a terminal device, or the positioning auxiliary device may also be an evolved NodeB (eNB), a transmission reception point (TRP), a next generation NodeB (gNB) in an NR system, a base station in other future mobile communication systems, an access node in a wireless fidelity (WiFi) system, or the like.

In this system, the terminal device may implement the method shown in any of embodiments of FIG. 2 to FIG. 7 of the present disclosure.

It will be appreciated that the communication system described in the embodiments of the present disclosure is to more clearly illustrate the technical solutions of the embodiments of the present disclosure, and does not constitute a limitation onto the technical solutions provided by the embodiments of the present disclosure. As those of ordinary skill in the art will know, with the evolution of the system architecture and the emergence of new service scenarios, the technical solutions provided by the embodiments of the present disclosure are also applicable to similar technical problems.

The present disclosure mainly focuses on the problem of how to accurately determine a transmission power of an SL PRS in an SL link positioning process where the SL PRS transmitted by the terminal device may need to be received by multiple positioning auxiliary devices. It is proposed to determine the transmission power of the SL PRS according to an actual path loss, and then transmit the SL PRS according to the determined transmission power, which ensures that each of the positioning auxiliary devices can receive the SL PRS, thereby achieving accurate and reliable positioning on the terminal device.

Referring to FIG. 2, FIG. 2 is a schematic flowchart of a method for transmitting a sidelink (SL) positioning reference signal (PRS) provided by an embodiment of the present disclosure. The method is performed by a first terminal device. As shown in FIG. 2, the method may include, but not limited to, the following steps.

In step 201, a transmission power of an SL PRS is determined according to a path loss of a transmission path.

Alternatively, the path loss of the transmission path includes a path loss of a downlink and/or a path loss of an SL link.

The path loss of the downlink is a path loss of an air interface between a terminal device and a network device, and may also be referred to as a path loss of a Uu interface. Alternatively, the path loss of the Uu port may be calculated and determined by the terminal device according to an RSRP value of a received downlink signal and a transmission power value of the network device, which is not limited by the present disclosure.

In the present disclosure, in a scenario where an uplink frequency band is shared by the SL link and the uplink, in order to avoid the interference of an uplink transmission on the SL PRS, the first terminal device may determine the transmission power of the SL PRS according to the path loss of the downlink.

That is to say, the terminal device may determine the path loss of the Uu port as the path loss of the transmission path, or may also determine the path loss of the SL link as the path loss of the transmission path, or may also select one from the path loss of the Uu port and the path loss of the SL link as the path loss of the transmission path according to a rule, or may also determine the path loss of the transmission path according to a combination of the path loss of the Uu port and the path loss of the SL link according to a rule, which is not limited by the present disclosure.

Alternatively, the terminal device may determine the path loss of the SL link according to a reference signal received power (RSRP) value of a demodulation reference signal (DMRS) of a physical SL shared channel (physical sidelink control channel, PSSCH) or a physical SL control channel (physical sidelink control channel, PSCCH).

For example, a terminal device B receives a DMRS in a PSSCH transmitted by a terminal device A (the first terminal device) to calculate an SL RSRP, performs layer 3 filtering on the SL RSRP and transmits it to the terminal device A. The terminal device A may obtain the path loss of the SL link by subtracting the SL RSRP from the transmission power of the PSSCH.

Alternatively, the terminal device A may further transmit the obtained path loss of the SL link to the terminal device B. That is to say, the terminal device may determine the path loss of the SL link by itself, or may receive the path loss of the SL link transmitted by another terminal device.

Alternatively, the terminal device may also determine the path loss of the SL link according to a RSRP value of the SL PRS. Alternatively, the terminal device may also determine the path loss of the SL link according to a DMRS of an SL synchronization signal block (SSB). Alternatively, the terminal device may also determine the path loss of the SL link according to a primary synchronization signal (PSS) of an SL SSB. Alternatively, the terminal device may also determine the path loss of the SL link according to a secondary synchronization signal (SSS) of an SL SSB.

For example, the terminal device B receives the SL PRS transmitted by the terminal device A (the first terminal device), calculates the SL RSRP, then performs layer 3 filtering on the SL RSRP and transmits it to the terminal device A. The terminal device A may obtain a path loss of an SL link between the terminal device A and the terminal device B after subtracting the SL RSRP from the transmission power of the PSSCH, and may further transmit the path loss of the SL link between the terminal device A and the terminal device B to the terminal device B.

In step 202, the SL PRS is transmitted according to the transmission power.

In the present disclosure, after determining the transmission power, the first terminal device may transmit the SL PRS according to the transmission power, thereby ensuring that the positioning auxiliary device can receive the PRS, so as to achieve positioning of the terminal device.

Alternatively, the first terminal device may transmit the SL PRS at a determined transmission power, or may transmit the SL PRS at a power value not lower than a determined transmission power, which is not limited in the present disclosure.

In the present disclosure, the first terminal device first determines the transmission power of the SL PRS according to the path loss of the transmission path, and then transmits the SL PRS according to the determined transmission power, which ensures that multiple positioning auxiliary devices can receive the SL PRS, thereby achieving accurate and reliable positioning of the terminal device.

Referring to FIG. 3, FIG. 3 is a schematic flowchart of another method for transmitting a sidelink (SL) positioning reference signal (PRS) provided by an embodiment of the present disclosure. The method is performed by a first terminal device. As shown in FIG. 3, the method may include, but not limited to, the following steps.

In step 301, the transmission power of the SL PRS is determined according to path losses of a plurality of SL links between the first terminal device and a plurality of positioning auxiliary devices.

Alternatively, the plurality of positioning auxiliary devices are devices that receive the SL PRS transmitted by the first terminal device. The plurality of positioning auxiliary devices may be other terminal devices or RSUs, which is not limited in the present disclosure.

Alternatively, a terminal device A (the first terminal device) may determine how many positioning auxiliary devices need to receive the SL PRS transmitted by the terminal device A according to a previous positioning negotiation process. For example, for positioning of SL time difference of arrival (TDOA), positioning of angle of arrival (AOA), and positioning of angle of departure (AOD), the terminal device A transmits SL PRS signals to multiple positioning auxiliary devices (usually greater than or equal to 3), and the multiple positioning auxiliary devices calculate the time of arrival, or the angle of arrival, or the RSRP of the SL PRS respectively, and finally calculate a position of UE A according to the results.

Alternatively, the first terminal device may determine a minimum value among a plurality of transmission powers respectively determined according to the path losses of the plurality of SL links as the transmission power of the SL PRS; or may determine a maximum value among a plurality of transmission powers respectively determined according to the path losses of the plurality of SL links as the transmission power of the SL PRS.

For example, there are three positioning auxiliary devices that receive the SL PRS transmitted by the first terminal device (the terminal device A), which are a terminal device B, a terminal device C, and a terminal device D. The terminal device A determines a transmission power value as P1 according to a path loss of an SL link between the terminal device A and the terminal device B, determines a transmission power value as P2 according to a path loss of an SL link between the terminal device A and the terminal device C, and determines a transmission power value as P3 according to a path loss of an SL link between the terminal device A and the terminal device D, where P1<P2<P3. Then, the terminal device may determine P1 as the transmission power of the SL PRS, or may determine P3 as the transmission power of the SL PRS, which is not limited in the present disclosure. Alternatively, the first terminal device may determine a path loss value corresponding to the first terminal device according to the path losses of the plurality of SL links and a weight value corresponding to each of the SL links, and may determine the transmission power of the SL PRS according to the path loss value.

Referring to the above example, if the path loss of the SL link between the terminal device A and the terminal device B is S1 with a corresponding weight value a, the path loss of the SL link between the terminal device A and the terminal device C is S2 with a corresponding weight value b, and the path loss of the SL link between the terminal device A and the terminal device D is S3 with a corresponding weight value c, then it may be determined that the path loss value is equal to a * S1 + b * S2 + c * S3.

Alternatively, a weight value corresponding to each SL link may be configured by a network device, or determined by the first terminal device according to a type of the positioning auxiliary device, etc., which is not limited in the present disclosure.

In step 302, the SL PRS is transmitted according to the transmission power.

For the specific implementation process of the above step 302, reference can be made to the detailed description of any embodiment of the present disclosure, which will not be described again here.

In the present disclosure, the first terminal device determines the transmission power of the SL PRS according to the path losses of the SL links with multiple positioning auxiliary devices, and then transmits the SL PRS according to the determined transmission power, which ensures that each positioning auxiliary device can receive the SL PRS, thereby achieving accurate and reliable positioning of the terminal device.

Referring to FIG. 4, FIG. 4 is a schematic flowchart of another method for transmitting a sidelink (SL) positioning reference signal (PRS) provided by an embodiment of the present disclosure. The method is performed by a first terminal device. As shown in FIG. 4, the method may include, but not limited to, the following steps.

In step 401, a plurality of transmission powers are determined according to a path loss of a downlink and a path loss of an SL link between the first terminal device and one or more positioning auxiliary devices.

In the present disclosure, the first terminal device may determine one transmission power according to the path loss of the downlink, and may determine one or more transmission powers according to the path loss of the SL link between the first terminal device and one or more positioning auxiliary devices, that is, the first terminal may determine the plurality of transmission powers.

For the specific implementation of the first terminal device according to the path loss of the downlink and the path loss of the SL link, reference can be made to the detailed description of any embodiment of the present disclosure, which will not be described again here.

In step 402, a minimum value or a maximum value among the plurality of transmission powers is determined as the transmission power of the SL PRS.

For example, the first terminal device determines a transmission power according to the path loss of the downlink as P1, determines a transmission power according to a path loss of an SL link between the first terminal device and a positioning auxiliary device 1 as P2, determines a transmission power according to a path loss of an SL link between the first terminal device and a positioning auxiliary device 2 as P3, and determines a transmission power according to a path loss of an SL link between the first terminal device and a positioning auxiliary device 3 as P4, where P1>P2>P3>P4. Then, the first terminal device may determine P1 as the transmission power of the SL PRS, or may determine P4 as the transmission power of the SL PRS.

For another example, the first terminal device determines the transmission power according to the path loss of the downlink as P1, determines a path loss of the SL link between the first terminal device and the positioning auxiliary device 1 being S1 and a corresponding weight being a, determines a path loss of the SL link between the first terminal device and the positioning auxiliary device 2 being S2 and a corresponding weight being b, and determines a path loss of the SL link between the first terminal device and the positioning auxiliary device 3 being S3 and a corresponding weight being c. The first terminal device determines a total path loss S according to a path loss of each SL link and a weight of each SL link, and further determines a transmission power as P2, where P1<P2. The first terminal device may determine P1 as the transmission power of the SL PRS, or determine P2 as the transmission power of the SL PRS, which is not limited in the present disclosure.

In step 403, the SL PRS is transmitted according to the transmission power.

For the specific implementation of the above step 403, reference can be made to the detailed description of any embodiment of the present disclosure, which will not be described again here.

In the present disclosure, the first terminal device may determine the plurality of transmission powers according to the path loss of the downlink and the path loss of the SL link between the first terminal device and one or more positioning auxiliary devices, then may determine a minimum value or a maximum value among the plurality of transmission powers as the transmission power of the SL PRS, and may transmit the SL PRS according to the determined transmission power. In this way, it ensures that multiple positioning auxiliary devices can receive the SL PRS, thereby achieving accurate and reliable positioning of the terminal device.

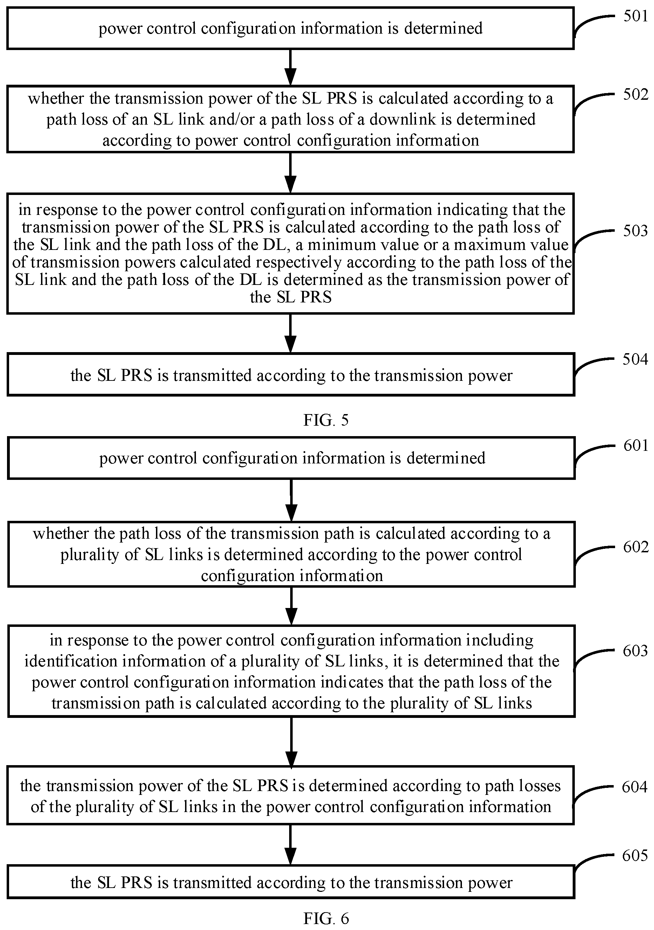

Referring to FIG. 5, FIG. 5 is a schematic flowchart of another method for transmitting a sidelink (SL) positioning reference signal (PRS) provided by an embodiment of the present disclosure. The method is performed by a first terminal device. As shown in FIG. 5, the method may include, but not limited to, the following steps.

In step 501, power control configuration information is determined.

In the present disclosure, the power control configuration information may be used to instruct the first terminal device a manner of calculating the SL PRS transmission power.

Alternatively, the power control configuration information may be preset in the first terminal device, which is not limited in the present disclosure.

Alternatively, the first terminal device may also receive the power control configuration information transmitted by a second terminal device.

Alternatively, the first terminal device may receive the power control configuration information transmitted by the second terminal device in any of the following manners: an SL long term evolved positioning protocol (LPP) message, a PC5-S message, a radio resource control (RRC) message, or SL control information (SCI).

Alternatively, the first terminal device may receive the power control configuration information transmitted by a network device.

Alternatively, the first terminal device may receive the power control configuration information transmitted by the network device via an LPP message.

Alternatively, the first terminal device may receive the power control configuration information transmitted by a location management function (LMF) device.

Alternatively, the first terminal device receives the power control configuration information transmitted by the LMF in any of the following manners:
a system broadcast message, a radio resource control (RRC) reconfiguration message, an RRC release message, downlink control information (DCI), or a medium access control (MAC) control element (CE).

In step 502, whether the transmission power of the SL PRS is calculated according to a path loss of an SL link and/or a path loss of a downlink is determined according to power control configuration information.

Alternatively, the power control configuration information may instruct the first terminal device to calculate the transmission power of the SL PRS according to a path loss of one SL link; or may instruct the first terminal device to calculate the transmission power of the SL PRS according to path losses of multiple SL links; or instruct the first terminal device to calculate the transmission power of the SL PRS according to the path loss of the downlink; or instruct the first terminal device to calculate the transmission power of the SL PRS according to the path loss of the SL link and the path loss of the downlink, etc., which is not limited in the present disclosure.

In step 503, in response to the power control configuration information indicating that the transmission power of the SL PRS is calculated according to the path loss of the SL link and the path loss of the DL, a minimum value or a maximum value of transmission powers calculated respectively according to the path loss of the SL link and the path loss of the DL is determined as the transmission power of the SL PRS.

In the present disclosure, if the power control configuration information indicates that the transmission power of the SL PRS is calculated according to the path loss of the SL link and the path loss of the downlink, the first terminal device may calculate a transmission power of one SL PRS according to the path loss of the downlink, may calculate a transmission power of one or more SL PRSs according to a path loss of one or more SL links, and may determine a minimum value or a maximum value among the multiple calculated transmission powers as the transmission power of the SL PRS.

For the method and the process of calculating the transmission power of one or more SL PRSs by the first terminal device according to the path loss of one or more SL links, reference can be made to the detailed description of any embodiment of the present disclosure, which will not be described again here.

In step 504, the SL PRS is transmitted according to the transmission power.

For the specific implementation of the above step 504, reference can be made to the detailed description of any embodiment of the present disclosure, which will not be described again here.

In the present disclosure, the first terminal device determines the power control configuration information, and when the power control configuration information indicates that the transmission power of the SL PRS is calculated according to the path loss of the SL link and the path loss of the downlink, the first terminal device may determine a minimum value or a maximum value of transmission powers calculated according to the path loss of the SL link and the path loss of the DL as the transmission power of the SL PRS, and may transmit the SL PRS according to the determined transmission power. Therefore, it ensures that each of the positioning auxiliary devices can receive the SL PRS, thereby achieving accurate and reliable positioning of the terminal device.

Referring to FIG. 6, FIG. 6 is a schematic flowchart of another method for transmitting a sidelink (SL) positioning reference signal (PRS) according to an embodiment of the present disclosure. The method is performed by a first terminal device. As shown in FIG. 6, the method may include, but not limited to, the following steps.

In step 601, power control configuration information is determined.

For the specific implementation of the above step 601 and step 602, reference can be made to the detailed description of any embodiment of the present disclosure, which will not be described again here.

In step 602, whether the path loss of the transmission path is calculated according to a plurality of SL links is determined according to the power control configuration information.

Alternatively, the power control configuration information may include an information field dedicated for indicating whether to calculate the path loss of the transmission path according to a plurality of SL links, so that the first terminal device may determine whether to calculate the path loss according to a plurality of SL links based on a value of the information field. For example, if the value of the information field is 1, it indicates that the path loss is calculated according to a plurality of SL links, otherwise, it indicates that the path loss is not calculated according to a plurality of SL links, etc., which is not limited in the present disclosure.

Alternatively, the first terminal device may also determine whether the transmission path can be calculated according to a plurality of SL links according to the number of identification information of the SL links included in the power control configuration information.

For example, if the power control configuration information includes identification information of a plurality of SL links, the first terminal device may determine that the power control configuration information indicates that the path loss is calculated according to the plurality of SL links; if identification information of only one SL link is included, it indicates that the path loss is calculated according to the one SL link, etc., and the present disclosure does not limit thereto.

The identification information of the SL link may be a layer 2 source identification (SL layer 2 source ID) and/or an SL layer 2 destination ID.

In step 603, in response to the power control configuration information including identification information of a plurality of SL links, it is determined that the power control configuration information indicates that the path loss of the transmission path is calculated according to the plurality of SL links.

In the present disclosure, if the power control configuration information includes identification information of a plurality of SL links, the first terminal device may determine that the power control configuration information indicates that the path loss of the transmission path is calculated according to the plurality of SL links.

In step 604, the transmission power of the SL PRS is determined according to path losses of the plurality of SL links in the power control configuration information.

In step 605, the SL PRS is transmitted according to the transmission power.

For the specific implementation of the above steps 604 and 605, reference can be made to the detailed description of any embodiment of the present disclosure, which will not be described again here.

In the present disclosure, the first terminal device determines the power control configuration information, and when the power control configuration information indicates that the transmission power of the SL PRS is calculated according to path losses of a plurality of SL links, the first terminal device calculates the transmission power of the SL PRS according to the path losses of the plurality of SL links, and transmits the SL PRS according to the determined transmission power, which ensures that each of the positioning auxiliary devices can receive the SL PRS, thereby achieving accurate and reliable positioning of the terminal device.

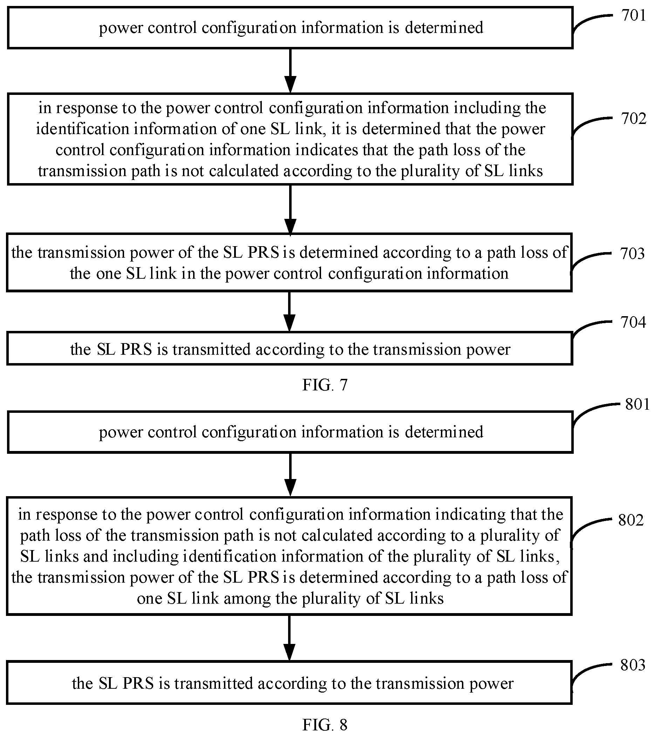

Referring to FIG. 7, FIG. 7 is a schematic flowchart of another method for transmitting a sidelink (SL) positioning reference signal (PRS) according to an embodiment of the present disclosure. The method is performed by a first terminal device. As shown in FIG. 7, the method may include, but not limited to, the following steps.

In step 701, power control configuration information is determined.

For the specific implementation of the above step 701, reference can be made to the detailed description of any embodiment of the present disclosure, which will not be described again here.

In step 702, in response to the power control configuration information including the identification information of one SL link, it is determined that the power control configuration information indicates that the path loss of the transmission path is not calculated according to the plurality of SL links.

In step 703, the transmission power of the SL PRS is determined according to a path loss of the one SL link in the power control configuration information.

In the present disclosure, if the power control configuration information only includes identification information of one SL link, the first terminal device may calculate the transmission power of the SL PRS according to the path loss of the one SL link.

In step 704, the SL PRS is transmitted according to the transmission power.

For the specific implementation process of the above steps 702 to 704, reference can be made to the detailed description of any embodiment of the present disclosure, which will not be described again here.

In the present disclosure, the first terminal device determines the power control configuration information, and when the power control configuration information only includes identification information of one SL link, the first terminal device may calculate the transmission power of the SL PRS according to the path loss of the one SL link, and then may transmit the SL PRS according to the determined transmission power, which ensures that each of the positioning auxiliary devices can receive the SL PRS, thereby achieving accurate and reliable positioning of the terminal device.

Referring to FIG. 8, FIG. 8 is a schematic flowchart of another method for transmitting a sidelink (SL) positioning reference signal (PRS) according to an embodiment of the present disclosure. The method is performed by a first terminal device. As shown in FIG. 8, the method may include, but not limited to, the following steps.

In step 801, power control configuration information is determined.

For the specific implementation of the above step 801, reference can be made to the detailed description of any embodiment of the present disclosure, which will not be described again here.

In step 802, in response to the power control configuration information indicating that the path loss of the transmission path is not calculated according to a plurality of SL links and including identification information of the plurality of SL links, the transmission power of the SL PRS is determined according to a path loss of one SL link among the plurality of SL links.

In the present disclosure, the power control configuration information includes an information field specifically used to indicate whether to calculate the path loss according to a plurality of SL links. The first terminal device may first determine whether to calculate the path loss according to the plurality of SL links according to a value of the information field.

If the information indicates not calculating the path loss according to a plurality of SL links, and the power control configuration information includes identification information of the plurality of SL links, then the first terminal device determines the transmission power of the SL PRS according to a path loss of one SL link among the plurality of SL links.

Alternatively, the first terminal device may calculate the path loss of the transmission path according to any one SL link among the plurality of SL links.

Alternatively, the first terminal device may calculate the path loss of the transmission path according to a designated SL link among the multiple SL links. The designated SL link is a link between the first terminal device and a designated positioning auxiliary device, and the designated positioning auxiliary device is a device that receives the SL PRS and has only an SL unicast connection with the first terminal device.

That is to say, if the power control configuration information includes identification information of a plurality of SL links, the first terminal device may first determine a positioning auxiliary device corresponding to identification information of each SL link, and then may determine the number and the types of links between the first terminal device and each positioning auxiliary device. If the first terminal device has only an SL unicast connection with a certain positioning auxiliary device, the certain positioning auxiliary device may be determined as the designated positioning auxiliary device, and the transmission power of the SL PRS is calculated according to a path loss of an SL link between the first terminal device and the designated positioning auxiliary device.

Alternatively, if the information field in the power control configuration information indicates that the path loss of the transmission path is not calculated according to multiple SL links, and the power control configuration information only includes identification information of one SL link, then the first terminal device may determine the transmission power of the SL PRS according to a path loss of the one SL link.

In step 803, the SL PRS is transmitted according to the transmission power.

For the specific implementation process of the above step 803, reference can be made to the detailed description of any embodiment of the present disclosure, which will not be described again here.

In the present disclosure, the first terminal device first determines the power control configuration information, and when the power control configuration information indicates that the path loss of the transmission path is not calculated according to a plurality of SL links, and the power control configuration information includes identification information of the plurality of SL links, the first terminal device may determine the transmission power of the SL PRS according to the path loss of one SL link among the plurality of SL links, and may transmit the SL PRS according to the determined transmission power, which ensures that each positioning auxiliary device can receive SL PRS, thereby achieving accurate and reliable positioning of the terminal device.

It should be noted that the aforementioned multiple embodiments of the present disclosure may be implemented individually or in combination, which is not limited in the embodiments of the present disclosure.

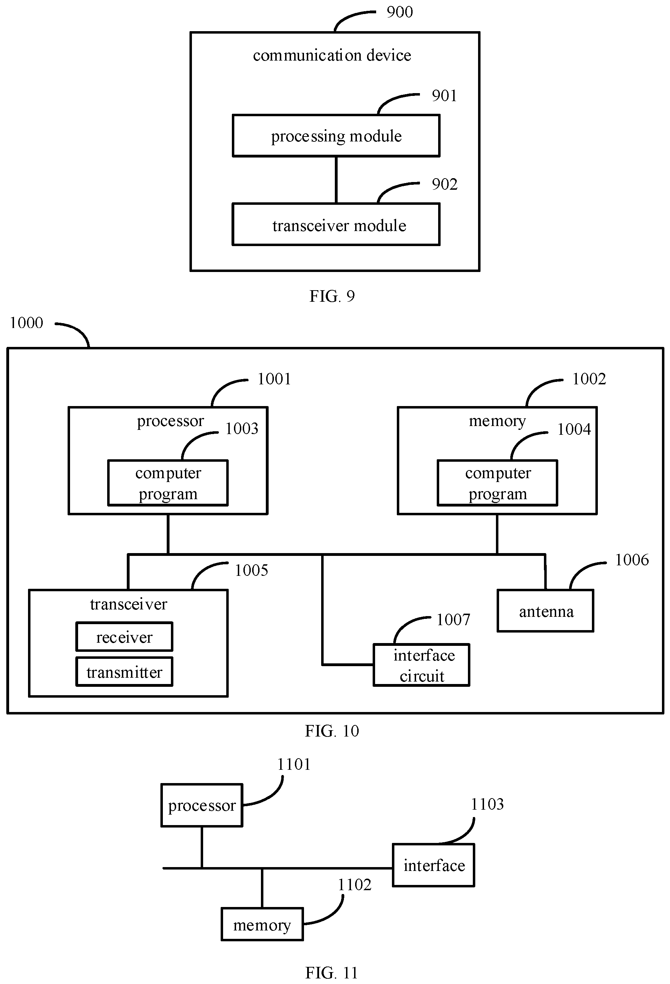

Reference is made to FIG. 9, which is a schematic structural diagram of a communication device provided by an embodiment of the present disclosure. The communication device 900 shown in FIG. 9 may include a processing module 901 and a transceiver module 902. The transceiver module 902 may include a transmitting module and/or a receiving module. The transmitting module is configured to implement a transmitting function, and the receiving module is configured to implement a receiving function. The transceiver module 902 may implement the transmitting function and/or the receiving function.

It may be understood that the communication device 900 may be a first terminal device, a device in the first terminal device, or a device that may be used in conjunction with the first terminal device.

The communication device 900 is on the side of the first terminal device.

The processing module 901 is configured to determine a transmission power of an SL PRS according to a path loss of a transmission path.

The transceiver module 902 is configured to transmit the SL PRS according to the transmission power.

Alternatively, the path loss of the transmission path includes a path loss of a downlink or a path loss of an SL link.

Alternatively, the processing module 901 is configured to:
determine the path loss of the SL link according to a reference signal received power (RSRP) value of a demodulation reference signal (DMRS) of a physical SL shared channel (PSSCH) or a physical SL control channel (PSCCH); or,
determine the path loss of the SL link according to a RSRP value of the SL PRS; or,
determine the path loss of the SL link according to a DMRS of an SL synchronization signal block (SSB); or,
determine the path loss of the SL link according to a primary synchronization signal (PPS) of an SL SSB; or,
determine the path loss of the SL link according to a secondary synchronization signal (SSS) of an SL SSB.

Alternatively, the processing module 901 is further configured to determine the transmission power of the SL PRS according to path losses of a plurality of SL links between the first terminal device and a plurality of positioning auxiliary devices.

Alternatively, the plurality of positioning auxiliary devices are devices that receive the SL PRS transmitted by the first terminal device.

Alternatively, the processing module 901 is further configured to:
determine a minimum value among a plurality of transmission powers respectively determined according to the path losses of the plurality of SL links as the transmission power of the SL PRS; or,
determine a maximum value among a plurality of transmission powers respectively determined according to the path losses of the plurality of SL links as the transmission power of the SL PRS.

Alternatively, the processing module 901 is further configured to:
determine a path loss value corresponding to the first terminal device according to the path losses of the plurality of SL links and a weight value corresponding to each of the SL links; and
determine the transmission power of the SL PRS according to the path loss value.

Alternatively, the processing module 901 is further configured to:
determine a plurality of transmission powers according to a path loss of a downlink and a path loss of an SL link between the first terminal device and one or more positioning auxiliary devices; and
determine a minimum value or a maximum value among the plurality of transmission powers as the transmission power of the SL PRS.

Alternatively, the processing module 901 is further configured to:
determine, according to power control configuration information, whether the transmission power of the SL PRS is calculated according to a path loss of an SL link; and/or,
determine, according to the power control configuration information, whether the transmission power of the SL PRS is calculated according to a path loss of a downlink.

Alternatively, the processing module 901 is further configured to:
in response to the power control configuration information indicating that the transmission power of the SL PRS is calculated according to the path loss of the SL link and the path loss of the DL, determine a minimum value or a maximum value of transmission powers calculated respectively according to the path loss of the SL link and the path loss of the DL as the transmission power of the SL PRS.

Alternatively, the processing module 901 is further configured to:
determine, according to power control configuration information, whether the path loss of the transmission path is calculated according to a plurality of SL links.

Alternatively, the processing module 901 is further configured to:
in response to the power control configuration information including identification information of the plurality of SL links, determine that the power control configuration information indicates that the path loss of the transmission path is calculated according to the plurality of SL links; or,
in response to the power control configuration information including identification information of one link, determine that the power control configuration information indicates that the path loss of the transmission path is not calculated according to the plurality of SL links.

Alternatively, the processing module 901 is further configured to:
in response to the power control configuration information indicating that the path loss of the transmission path is not calculated according to a plurality of SL links and including identification information of one SL link, determine the transmission power of the SL PRS according to a path loss of the one SL link; or,
in response to the power control configuration information indicating that the path loss of the transmission path is not calculated according to a plurality of SL links and including identification information of the plurality of SL links, determine the transmission power of the SL PRS according to a path loss of one SL link among the plurality of SL links.

Alternatively, the processing module 901 is further configured to:
calculate the path loss of the transmission path according to any one SL link among the plurality of SL links; or,
calculate the path loss of the transmission path according to a designated SL link among the plurality of SL links, where the designated SL link is a link between the first terminal device and a designated positioning auxiliary device, and the designated positioning auxiliary device is a terminal device that receives the SL PRS and has only an SL unicast connection with the first terminal device.

Alternatively, the transceiver module 902 is further configured to:
receive the power control configuration information transmitted by a second terminal device; or,
receive the power control configuration information transmitted by a network device; or,
receive the power control configuration information transmitted by a location management function (LMF) device.

Alternatively, the transceiver module 902 is further configured to:
receive the power configuration control information transmitted by the second terminal device in any of the following manners:
an SL long term evolved positioning protocol (LPP) message, a PC5-S message, a radio resource control (RRC) message, or SL control information (SCI).

Alternatively, the transceiver module 902 is further configured to:
receive the power control configuration information transmitted by the network device via an LPP message.

Alternatively, the transceiver module 902 is further configured to:
receive the power control configuration information transmitted by the LMF in any of the following manners:
a system broadcast message, a radio resource control (RRC) reconfiguration message, an RRC release message, downlink control information (DCI), or a medium access control (MAC) control element (CE).

In the present disclosure, the first terminal device determines the transmission power of the SL PRS according to the path loss of the transmission path, and then transmits the SL PRS according to the determined transmission power. This ensures that each positioning auxiliary device can receive SL PRS, thereby achieving accurate and reliable positioning of the terminal device.

Referring to FIG. 10, FIG. 10 is a schematic structural diagram of another communication device provided by an embodiment of the present disclosure. The communication device 1000 may be a first terminal device, or may be a chip, a chip system, or a processor that supports the first terminal device to implement the above method. The device may be used to implement the method described in the above method embodiments. For details, reference can be made to the description in the above method embodiments.

The communication device 1000 may include one or more processors 1001. The processor 1001 may be a general-purpose processor or a special-purpose processor, or the like. For example, the processor may be a baseband processor or a central processing unit. The baseband processor may be used to process communication protocols and communication data. The central processor may be used to control the communication device (such as a base station, a baseband chip, a terminal device, a chip of the terminal device, a DU or a CU, etc.), to execute the computer program, and to process data in the computer program.

Alternatively, the communication device 1000 may also include one or more memories 1002, on which a computer program 1004 may be stored. The processor 1001 is configured to execute the computer program 1004 to cause the communication device 1000 to perform steps described in the above method embodiments. Alternatively, the memory 1002 may also store data. The communication device 1000 and the memory 1002 may be arranged separately or integrated together.

Alternatively, the communication device 1000 may also include a transceiver 1005 and an antenna 1006. The transceiver 1005 may be referred to as a transceiver unit, a transceiver module, a transceiver circuit, etc., and is configured to implement receiving and transmitting functions. The transceiver 1005 may include a receiver and a transmitter. The receiver may be referred to as a receiver unit or a receiver circuit, etc., and configured to implement receiving function; the transmitter may be referred to as a transmitter unit, a transmitter circuit, etc., and configured to implement the transmitting function.

Alternatively, the communication device 1000 may also include one or more interface circuits 1007. The interface circuit 1007 is configured to receive code instructions and transmit them to the processor 1001. The processor 1001 is configured to execute the code instructions to cause the communication device 1000 to perform the method described in the above method embodiments.

The communication device 1000 is a first terminal device, and the processor 1001 is configured to perform step 201 in FIG. 2, step 301 in FIG. 3, etc., and the transceiver 1005 is configured to perform step 202 in FIG. 2, or step 302 in FIG. 3, etc.

In an implementation, the processor 1001 may include a transceiver for implementing receiving and transmitting functions. For example, the transceiver may be a transceiver circuit, an interface, or an interface circuit. The transceiver circuit, the interface or the interface circuit for implementing receiving and transmitting functions may be separated from each other or integrated together. The above-mentioned transceiver circuit, interface or interface circuit may be configured to read and write codes/data, or transmit or transfer signals.

In an implementation, the processor 1001 may store a computer program 1003, and the computer program 1003, and when running on the processor 1001, causes the communication device 1000 to perform the method described in the above method embodiments. The computer program 1003 may be solidified in the processor 1001, in which case the processor 1001 may be implemented by hardware.

In one implementation, the communication device 1000 may include a circuit, and the circuit can implement the functions of transmitting, receiving, or communicating in the foregoing method embodiments. The processor and the transceiver described in the present application may be implemented in an integrated circuit (IC), an analog IC, a radio frequency integrated circuit (RFIC), a mixed signal IC, an application specific integrated circuits (ASIC), a printed circuit board ( printed circuit board (PCB), electronic equipment, etc. The processor and the transceiver may be manufactured using various IC process techniques, such as complementary metal oxide semiconductor (CMOS), N-channel Metal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication device described in the above embodiments may be a network device or a terminal device, the scope of the communication device described in the present application is not limited thereto, and the structure of the communication device may not be limited by FIG. 15. The communication device may be a stand-alone device or may be a part of a larger device. For example, the communication device may be:
(1) an independent integrated circuit (IC), or chip, or chip system, or subsystem;
(2) a collection of one or more ICs, where, Alternatively, the IC collection may also include a storage component for storing data and a computer program;
(3)ASIC, such as modem;
(4) a module that can be embedded into other devices;
(5) a receiver, a terminal device, an intelligent terminal device, a cellular phone, a wireless equipment, a handheld device, a mobile unit, a vehicle-mounted equipment, a network device, a cloud equipment, an artificial intelligence equipment, etc.;
(6) other component(s), etc.

For the case where the communication device may be a chip or a chip system, reference may be made to a structural diagram of a chip as shown in FIG. 11. The chip shown in FIG. 11 includes a processor 111 and an interface 113. The number of processors 1101 may be one or multiple, and the number of interfaces 113 may be multiple.

For the case where the chip is configured to implement the functions of the first terminal device in the embodiments of the present disclosure,
the interface 1103 is configured to perform step 202 in FIG. 2, or to perform step 302 in FIG. 3, etc.

Alternatively, the chip further includes a memory 1102, and the memory 1102 is used to store necessary computer programs and data.

Those skilled in the art can also understand that various illustrative logical blocks and steps listed in the embodiments of the present disclosure can be implemented by electronic hardware, computer software, or a combination of both. Whether such functions are implemented in hardware or software depends on the specific application and the overall system design requirement. Those skilled in the art can use various methods to implement the described functions for each specific application, but such implementation should not be understood as exceeding the protection scope of the embodiments of the present disclosure.

The present application further provides a readable storage medium, on which instructions are stored. When the instructions are executed by a computer, functions of any of the above method embodiments are implemented.

The present application further provides a computer program product. The computer program product is executed by a computer to implement functions of any of the above method embodiments.

The above embodiments may be implemented in whole or in part by software, hardware, firmware, or any combination thereof. When implemented by software, it may be implemented in whole or in part in the form of a computer program product. The computer program product includes one or more computer programs. When the computer program is loaded and executed by a computer, the processes or functions described in the embodiments of the present application are generated in whole or in part. The computer may be a general-purpose computer, a special-purpose computer, a computer network, or other programmable device. The computer program may be stored in or transferred from one computer-readable storage medium to another computer-readable storage medium. For example, the computer program may be transferred from a website, a computer, a server, or a data center to another website, computer, server or data center to another website, a computer, a server, or a data center to another website, computer, server or data center through wired means (such as coaxial cable, optical fiber, digital subscriber line (DSL)) or wireless means (such as infrared, wireless, microwave, etc.). The computer-readable storage medium may be any available medium that can be accessed by a computer or a data storage device integrated by one or more available media, which includes a server, a data center, and so on. The available media may be magnetic media (e.g., floppy disk, hard disk, magnetic tape), optical media (e.g., high-density digital video discs (DVD)), or semiconductor media (e.g., solid state disk (SSD)) etc.

Those of ordinary skill in the art may appreciate that numerical numbers such as first and second involved in the present application are only for convenience of description, and are not used to limit the scope of the embodiments of the present application, or to indicate the order.

At least one in the present application may also be described as one or more, and the plurality may be two, three, four or more, which are not limited by the present application. In the embodiments of the present application, technical features are distinguished by terms "first", "second", "third", "A", "B", "C", and "D", etc. The technical features described by the terms "first", "second", "third", "A", "B", "C" and "D" are not in an order of precedence or in an order of size.

The corresponding relationships shown in each table in the present application can be configured or predefined. The values of the information in each table are only examples and can be configured as other values, which is not limited by the present application. When the correspondence between information and each parameter is configured, it is not necessarily required to configure all the correspondences shown in each table. For example, in the table in the present application, the correspondences shown in some rows may not be configured. For another example, appropriate form adjustments can be made based on the above table, such as splitting, merging, etc. The names of the parameters shown in the titles of the above tables may also be other names understandable by the communication apparatus, and the values or expressions of the parameters may also be other values or expressions understandable by the communication apparatus. When implementing the above tables, other data structures can also be used, such as array, queue, container, stack, linear list, pointer, linked list, tree, graph, structure, class, heap, distributed table or hash table.

The term predefined in the present application may be understood as defined, pre-defined, storage, pre-storage, pre-negotiation, pre-configuration, solidification, or pre-burning.

Those of ordinary skill in the art will appreciate that the units and algorithm steps of each example described in conjunction with the embodiments disclosed herein can be implemented with electronic hardware, or a combination of computer software and electronic hardware. Whether these functions are performed in hardware or software depends on the specific application and design constraints of the technical solution. Those of ordinary skill in the art may implement the described functionality using different methods for each specific application, but such implementations should not be considered as exceeding the scope of the present application.

Those of ordinary skill in the art can clearly understand that for the convenience and simplicity of description, reference may be made to the corresponding processes in the foregoing method embodiments for the specific working processes of the systems, devices and units described above, which will not be described again here.

The above embodiments are only specific implementations of the present application, but the protection scope of the present application is not limited thereto. Changes or substitutions easily occurring to any person familiar with the technical field within the technical scope disclosed in the present application shall fall within the protection scope of the present disclosure. Therefore, the protection scope of the present application should be subject to the protection scope of the claims.

## Claims

1. A method for transmitting a sidelink (SL) positioning reference signal (PRS), performed by a first terminal device, comprising:
determining a transmission power value of the SL PRS according to a path loss of a transmission path; and
transmitting the SL PRS based on the transmission power value.

2. The method according to claim 1, wherein the path loss of the transmission path comprises a path loss of a downlink or a path loss of an SL link.

3. The method according to claim 2, further comprising:
determining the path loss of the SL link according to a reference signal received power (RSRP) value of a demodulation reference signal (DMRS) of a physical SL shared channel (PSSCH) or a physical SL control channel (PSCCH); or,
determining the path loss of the SL link according to a RSRP value of the SL PRS; or,
determining the path loss of the SL link according to a DMRS of an SL synchronization signal block (SSB); or,
determining the path loss of the SL link according to a primary synchronization signal (PPS) of an SL SSB; or,
determining the path loss of the SL link according to a secondary synchronization signal (SSS) of an SL SSB.

4. The method according to claim 1, wherein the determining the transmission power value of the SL PRS according to the path loss of the transmission path comprises:
determining the transmission power value of the SL PRS according to path losses of a plurality of SL links between the first terminal device and a plurality of positioning auxiliary devices.

5. The method according to claim 4, wherein the plurality of positioning auxiliary devices are devices that receive the SL PRS transmitted by the first terminal device.

6. The method according to claim 4, wherein the determining the transmission power value of the SL PRS according to the path losses of the plurality of SL links between the first terminal device and the plurality of positioning auxiliary devices comprises:
determining a minimum value among a plurality of transmission power values respectively determined according to the path losses of the plurality of SL links as the transmission power value of the SL PRS; or,
determining a maximum value among a plurality of transmission power values respectively determined according to the path losses of the plurality of SL links as the transmission power value of the SL PRS.

7. The method according to claim 4, wherein the determining the transmission power value of the SL PRS according to the path losses of the plurality of SL links between the first terminal device and the plurality of positioning auxiliary devices comprises:
determining a path loss value corresponding to the first terminal device according to the path losses of the plurality of SL links and a weight value corresponding to each of the SL links; and
determining the transmission power value of the SL PRS according to the path loss value.

8. The method according to claim 1, wherein the determining the transmission power value of the SL PRS according to the path loss of the transmission path comprises:
determining a plurality of transmission power values according to a path loss of a downlink and a path loss of an SL link between the first terminal device and one or more positioning auxiliary devices; and
determining a minimum value or a maximum value among the plurality of transmission power values as the transmission power value of the SL PRS.

9. The method according to claim 1, further comprising:
determining, according to power control configuration information, whether the transmission power value of the SL PRS is calculated according to a path loss of an SL link; and/or,
determining, according to the power control configuration information, whether the transmission power value of the SL PRS is calculated according to a path loss of a downlink (DL).

10. The method according to claim 9, further comprising:
in response to the power control configuration information indicating that the transmission power value of the SL PRS is calculated according to the path loss of the SL link and the path loss of the DL, determining a minimum value or a maximum value of transmission power values calculated respectively based on the path loss of the SL link and the path loss of the DL as the transmission power value of the SL PRS.

11. The method according to claim 1, further comprising:
determining, according to power control configuration information, whether the path loss of the transmission path is calculated based on a plurality of SL links.

12. The method according to claim 11, further comprising:
in response to the power control configuration information comprising identification information of the plurality of SL links, determining that the power control configuration information indicates that the path loss of the transmission path is calculated based on the plurality of SL links; or,
in response to the power control configuration information comprising identification information of one link, determining that the power control configuration information indicates that the path loss of the transmission path is not calculated based on the plurality of SL links.

13. The method according to claim 11, wherein the determining the transmission power value of the SL PRS based on the path loss of the transmission path comprises:
in response to the power control configuration information indicating that the path loss of the transmission path is not calculated according to a plurality of SL links and comprising identification information of one SL link, determining the transmission power value of the SL PRS according to a path loss of the one SL link; or,
in response to the power control configuration information indicating that the path loss of the transmission path is not calculated according to a plurality of SL links and comprising identification information of the plurality of SL links, determining the transmission power value of the SL PRS according to a path loss of one SL link among the plurality of SL links.

14. The method according to claim 13, wherein the determining the transmission power value of the SL PRS according to the path loss of the one SL link among the plurality of SL links comprises:
calculating the path loss of the transmission path according to any one SL link among the plurality of SL links; or,
calculating the path loss of the transmission path according to a designated SL link among the plurality of SL links, wherein the designated SL link is a link between the first terminal device and a designated positioning auxiliary device, and the designated positioning auxiliary device is a terminal device that receives the SL PRS and has only an SL unicast connection with the first terminal device.

15. The method according to any one of claims 9 to 14, further comprising:
receiving the power control configuration information transmitted by a second terminal device; or,
receiving the power control configuration information transmitted by a network device; or,
receiving the power control configuration information transmitted by a location management function (LMF) device.

16. The method according to claim 15, further comprising:
receiving the power configuration control information transmitted by the second terminal device in any of the following manners:
an SL long term evolved positioning protocol (LPP) message, a PC5-S message, a radio resource control (RRC) message, or SL control information (SCI).

17. The method according to claim 15, further comprising:
receiving the power control configuration information transmitted by the network device via an LPP message.

18. The method according to claim 15, further comprising:
receiving the power control configuration information transmitted by the LMF in any of the following manners:
a system broadcast message, a radio resource control (RRC) reconfiguration message, an RRC release message, downlink control information (DCI), or a medium access control (MAC) control element (CE).

19. A communication device, comprising:
a processing module, configured to determine a transmission power value of an SL PRS according to a path loss of a transmission path; and
a transceiver module, configured to transmit the SL PRS based on the transmission power value.

20. A communication device, comprising: a processor and a memory, wherein a computer program is stored in the memory, and the processor is configured to execute the computer program stored in the memory to cause the device to perform the method according to any one of claims 1 to 18.

21. A communication system, comprising: a terminal device and a positioning auxiliary device, wherein the terminal device is configured to perform the method according to any one of claims 1 to 18.

22. A computer-readable storage medium, configured to store instructions, that when executed, causes the method according to any one of claims 1 to 18 to be implemented.
